# FASCICULE DE BREVET EUROPEEN

(11) **EP 2 231 305 B1**
(45) Date de publication et mention de la délivrance du brevet: **11.06.2014**
(21) Numéro de dépôt: 08866679.7
(22) Date de dépôt: 24.12.2008
(51) Int. Cl.: B01D 53/00, B01D 53/26, F25J 3/06, F25B 39/00

(54) **SYSTEME DE REFROIDISSEMENT D'UN MELANGE PSYCHROMETRIQUE PAR COUPLAGE D'UNE UNITE DE CONDENSATION ET D'UNE UNITE D'EVAPORATION**
SYSTEM ZUR KÜHLUNG EINER PSYCHROMETRISCHEN MISCHUNG MITTELS KOPPLUNG EINES KONDENSATORS AN EINEN VERDAMPFER
SYSTEM FOR COOLING A PSYCHROMETRIC MIXTURE BY COUPLING A CONDENSER AND AN EVAPORATOR

(30) Priorité: 27.12.2007 FR 0760386
(43) Date de publication de la demande: 29.09.2010
(73) Titulaire: ASSOCIATION POUR LA RECHERCHE ET LE DEVELOPPEMENT DES METHODES ET PROCESSUS INDUSTRIELS (ARMINES), 75272 Paris Cédex 06 (FR)
(72) Inventeur: CLODIC, Denis, F-75006 Paris (FR); YOUNES, Mourad, F-78700 Conflans Sainte Honorine (FR); BOU LAWZ KSAYER, Elias, F-75013 PARIS (FR)
(74) Mandataire: Delumeau, François Guy
(86) Numéro de dépôt international: PCT/FR2008/052418
(87) Numéro de publication internationale: WO 2009/083696

(56) Documents cités:
- EP-A- 0 485 375
- EP-B- 0 796 134
- EP-B1- 0 531 293
- DE-A1- 3 147 460
- FR-A- 601 554
- US-A- 5 048 200

## Description

### Arrière-plan de l'invention

L'invention se situe dans le domaine général du refroidissement des mélanges psychrométriques.

On rappelle en premier lieu qu'un mélange psychrométrique contient deux types de gaz, à savoir :
- un premier type de gaz qui, dans les conditions de température et de pression ne peuvent pas passer à l'état liquide ; et
- un deuxième type de gaz dans des conditions où ils peuvent soit se condenser, soit s'évaporer.

A titre d'exemple, l'air humide est un exemple de mélange psychrométrique, celui-ci comportant :
- de l'air sec, celui-ci ne se condensant pas dans les conditions normales de température et de pression ; et
- de la vapeur d'eau, celle-ci pouvant, soit se condenser, soit s'évaporer en fonction des conditions de température et de pression.

Les fumées des unités de combustion, (ou plus généralement tout effluent gazeux comportant des gaz de l'air dans des concentrations variables et des composés tels que le CO₂ et H₂O) sont d'autres exemples de mélanges psychrométriques. En général les fumées de combustion sont des mélanges psychrométriques présentant une concentration importante en vapeur d'eau.

On connaît d'autres mélanges psychrométriques moins usuels, et notamment les mélanges d'hélium et d'ammoniac et les mélanges d'hydrogène et d'ammoniac.

Le document FR2820052 décrit un procédé d'extraction du dioxyde de carbone contenu dans des fumées, dans lequel les fumées sont refroidies à une pression sensiblement égale à la pression atmosphérique et à une température telle que le dioxyde de carbone passe directement de l'état vapeur à l'état solide par un processus d'antisublimation, l'eau étant en outre extraite sous forme liquide par un échangeur à air par exemple.

Un tel système, bien que particulièrement avantageux, ne permet malheureusement pas de récupérer la froideur des gaz refroidis sur un grand écart de température. Il ne permet pas non plus d'effectuer une déshumidification poussée des fumées sèches, à faible coût.

Par ailleurs, le document FR 601 554 divulgue un système comportant une unité de condensation et une unité d'évaporation utilisées pour concentrer un liquide.

### Objet et résumé de l'invention

Selon un premier aspect, l'invention concerne un système de refroidissement d'un premier mélange psychrométrique tel que défini dans les revendications 1 à 12.

De façon très avantageuse, le couplage de l'unité de condensation et de l'unité d'évaporation principale permet de récupérer la froideur du premier mélange psychrométrique sur un grand écart de température.

Ce système permet en outre de déshumidifier le premier mélangé psychrométrique de façon très poussée. Par exemple, lorsque le premier mélange psychrométrique est une fumée, une déshumidification jusqu'à 1.10⁻⁶ g H₂O/kg peut être obtenue, à faible coût, et avec une haute efficacité énergétique.

Dans le système selon l'invention, le fluide peut passer de l'état gazeux à l'état liquide dans l'unité de condensation, et de l'état liquide à l'état gazeux dans l'unité d'évaporation principale, lorsque les conditions de température et de pression des mélanges psychrométriques sont réunies.

Le mélange psychrométrique à refroidir circulant dans l'unité de condensation est saturant ou proche de la saturation.

L'unité de condensation comporte un circuit de circulation d'un mélange psychrométrique contenant un fluide condensable, un circuit de circulation d'un liquide comportant ce fluide, la température du liquide étant inférieure à celle du point de rosée du mélange, des moyens de mise en contact direct du mélange psychrométrique et du liquide, et des moyens aptes à mesurer un écart de température entre la température du liquide entrant dans cette unité et la température du mélange psychrométrique sortant de cette unité.

Il est important de noter que l'unité de condensation selon l'invention est fondamentalement différente des tours de refroidissement connues dans le domaine des technologies de transfert de chaleur.

En effet, d'une façon générale, dans de telles tours de refroidissement, de l'eau à refroidir est pulvérisée par des rampes de distribution sur un garnissage, et mise en contact direct avec un flux d'air mis en mouvement par un ventilateur ou par un courant d'air, ce flux d'air se chargeant en humidité et entraînant les gouttelettes d'eau vers une soute agencée dans la partie inférieure de la tour.

Autrement dit, le fonctionnement de ces tours est basé sur le refroidissement de l'eau par évaporation dans un air relativement éloigné de ces conditions de saturation.

L'objectif et le fonctionnement de l'unité de condensation selon l'invention est donc fondamentalement différent, puisqu'il vise à condenser la vapeur d'eau (ou plus généralement le fluide condensable) contenu dans le mélange psychrométrique dans des conditions proches de saturation par contact direct avec un liquide plus froid.

Plus précisément, la température du liquide est inférieure au point de rosée du mélange psychrométrique.

Conformément à l'invention, le liquide circulant dans l'unité de condensation comporte au moins un composant identique au fluide condensable du mélange psychrométrique.

Dans un mode particulier de réalisation, les moyens de mise en contact direct de l'unité de condensation selon l'invention sont constitués par un garnissage, de façon à augmenter la surface de contact direct entre le liquide et le mélange psychrométrique.

Dans un mode particulier de réalisation, les circuits de circulation du liquide et de circulation du mélange psychrométrique de l'unité de condensation selon l'invention sont agencés de sorte que le mélange psychrométrique et le liquide circulent à contre-courant.

De façon préférée, le liquide entraîné par la gravité circule de haut en bas, et le mélange psychrométrique de bas en haut.

L'évolution globale dans l'unité de condensation selon l'nvention est la suivante : le liquide entrant à une température initiale, nettement inférieure à la température d'entrée du mélange psychrométrique, typiquement de 5 à 50 K, se réchauffe progressivement par contact direct avec le mélange psychrométrique.

Inversement le mélange psychrométrique se refroidit.

Au cours de ce refroidissement, le fluide, proche de ses conditions de saturation, contenu dans le mélange psychrométrique, se condense, ce qui accroît ainsi le débit masse du liquide.

Il résulte de ces transferts couplés de masse et de chaleur, d'une part que le mélange psychrométrique sort de l'unité de condensation, à une température inférieure à sa température d'entrée et avec une composition en fluide condensable inférieure à la composition d'entrée, et d'autre part, que la température du liquide en sortie de l'unité de condensation est supérieure à sa température d'entrée, le débit de masse sortant étant supérieur au débit entrant, le débit liquide s'étant accru du débit de masse du fluide condensé.

Conformément à l'invention, le mélange psychrométrique traversant l'unité d'évaporation principale contient le fluide condensable précité, mais dans une concentration éloignée des conditions de saturation.

Dans l'unité d'évaporation principale, le liquide est à une température supérieure à celle du mélange psychrométrique.

En conséquence le liquide s'évapore partiellement et se refroidit dans l'unité d'évaporation principale. Le débit de liquide sortant de cette unité d'évaporation principale est donc inférieur au débit entrant.

Pour sa part, le mélange psychrométrique se réchauffe en traversant l'unité d'évaporation principale, et sa concentration en fluide condensable augmente.

Dans un mode particulier de réalisation, le système selon l'invention comporte des moyens de réglage du débit du premier mélange psychrométrique et/ou du débit du deuxième mélange psychrométrique.

Cette caractéristique permet avantageusement de réguler le débit d'un mélange par rapport au débit de l'autre mélange, et donc d'équilibrer globalement les transferts de masse et de chaleur dans le système.

Les moyens de régulation du système selon l'invention peuvent par exemple comporter quatre sondes thermiques disposées :
- aux entrées du liquide dans l'unité de condensation et dans l'unité d'évaporation principale ; et
- aux sorties des mélanges psychrométriques de ces unités.

Dans le système selon l'invention, il est souhaitable que l'écart entre la température du liquide entrant dans une unité et la température du mélange psychrométrique sortant de cette unité soit de l'ordre de 1 à 2°C.

Dans la plupart des applications, les débits des mélanges psychrométriques circulant dans l'unité de condensation et l'unité d'évaporation principale sont fixés par des conditions de fonctionnement externe à ses unités.

Il est donc préférable de régler les débits des liquides entrant dans ces unités.

Dans la suite de ce document, on appellera :
- "pincement de condensation" l'écart entre la température du mélange psychrométrique déshumidifié sortant de l'unité de condensation et la température du liquide plus froid entrant dans cette unité ; et
- "pincement d'évaporation" l'écart de température entre le mélange psychrométrique humidifié sortant de l'unité d'évaporation et la température du liquide plus chaud entrant dans cette unité.

Les valeurs de ces deux pincements peuvent par exemple être lues par les moyens de régulation du système selon l'invention à intervalles réguliers, typiquement toutes les 30 secondes.

Dans un mode particulier de réalisation de l'invention, les moyens de régulation comportent :
- des moyens de mesure d'un écart de température entre la température du liquide entrant dans au moins une des unités de condensation ou d'évaporation principale et la température du mélange psychrométrique en sortie de cette unité ; et
- des moyens pour régler le débit de liquide entrant dans cette unité en fonction de cet écart de température.

Préférentiellement, les moyens de régulation du système selon l'invention mesurent à la fois le pincement de condensation et le pincement d'évaporation et régulent le débit de liquide entrant dans chacune des unités de condensation et d'évaporation principale en fonction de ces deux pincements.

Dans un mode particulier de réalisation de l'invention, les moyens de régulation règlent le débit de liquide entrant dans une unité au moyen d'une pompe apte à injecter du liquide dans cette unité à partir d'une réserve.

Cette réserve peut être constituée par une soute agencée dans la partie inférieure de l'autre unité.

De façon optionnelle, le système selon l'invention comporte des moyens pour refroidir le liquide en sortie de l'unité d'évaporation principale, autrement dit en entrée de l'unité de condensation. Le liquide déjà refroidi dans l'unité d'évaporation principale est ainsi refroidi une deuxième fois. Un échangeur placé sur le circuit de circulation, en aval de l'unité d'évaporation principale peut être utilisé à cet effet.

Dans ce mode de réalisation particulier, les moyens de régulation selon l'invention sont préférentiellement aptes à :
- accroître le débit de liquide entrant dans l'unité d'évaporation principale ;
- accroître le débit de liquide entrant dans l'unité de condensation ;
- mesurer le pincement de condensation ; et lorsque ce pincement est supérieur à un seuil :
- agir sur les moyens de refroidissement du liquide pour en accroître la puissance frigorifique.

De façon optionnelle, le système selon l'invention comporte un trop-plein pour évacuer une partie du liquide condensé dans l'unité de condensation. Cette caractéristique permet de récupérer une partie du liquide qui se condense dans l'unité de condensation, lorsque celle-ci est supérieure à la quantité de liquide qui s'évapore dans l'unité d'évaporation principale.

Dans ce mode particulier de réalisation de l'invention, les moyens de régulation du système sont préférentiellement aptes à :
- mesurer le pincement de condensation ; et lorsque ce pincement est supérieur à un seuil ;
- accroître les débits de liquide entrant dans les unités de condensation et d'évaporation principale dans des proportions similaires.

Dans une variante d'utilisation de l'invention, le liquide comporte un sel. Dans ce cas, il peut être intéressant d'abaisser la concentration en eau de la solution liquide en sortie de l'unité de condensation.

Aussi, dans cette variante de réalisation particulière, le système selon l'invention comporte une unité d'évaporation secondaire du liquide, placée en série entre l'unité de condensation et la première unité d'évaporation dans le circuit de circulation du liquide.

Cette unité d'évaporation secondaire fonctionne à une température largement supérieure à celle de l'unité d'évaporation principale.

Dans un mode particulier de mise en oeuvre de cette variante de l'invention, l'unité d'évaporation secondaire comporte une entrée et une sortie d'air, l'air étant apte à circuler à contre courant du liquide dans l'unité d'évaporation secondaire, et un ventilateur à débit variable en amont de cette entrée d'air, les moyens de régulation étant aptes à ajuster le débit d'air et le débit de liquide entrant dans l'unité d'évaporation secondaire en fonction d'un écart de température entre la température du liquide entrant dans cette unité et la température de l'air sortant de cette unité.

Dans un mode particulier de réalisation de cette variante, le système selon l'invention comporte un échangeur de chaleur apte à récupérer la froideur du liquide s'écoulant de l'unité de condensation vers l'unité d'évaporation secondaire.

Dans un mode particulier de réalisation de cette variante, le système selon l'invention comporte des moyens d'ajustement de la concentration en sel dans le liquide en sortie de chacune des unités d'évaporation principale et secondaire.

Dans une utilisation type de l'invention, notamment pour le refroidissement de fumées, le liquide entrant dans l'unité d'évaporation principale à une température d'environ -40°C.

Or, les unités d'évaporation de l'état actuel de la technique n'ont jamais été utilisées dans de telles plages de température.

Par conséquent, et selon un troisième aspect, l'invention concerne une unité d'évaporation comportant un circuit de circulation d'un mélange psychrométrique contenant un fluide évaporable, un circuit de circulation d'un liquide comportant ce fluide, la température du liquide étant de l'ordre de -40°C et supérieure à celle du point de rosée du mélange psychrométrique, des moyens de mise en contact direct du mélange psychrométrique et du liquide, et des moyens de contrôle aptes à mesurer un écart de température entre la température du liquide entrant dans l'unité d'évaporation et la température du mélange psychrométrique en sortie de cette unité.

L'invention vise aussi le procédé de refroidissement mis en oeuvre par le système selon l'invention tel que défini par les revendications 13 et 14.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente une unité de condensation conforme à l'invention dans un mode particulier de réalisation ;
- la figure 2 représente une unité d'évaporation conforme à l'invention dans un mode particulier de réalisation ;
- la figure 3 représente un système de refroidissement d'un mélange psychrométrique conforme à l'invention dans un mode particulier de réalisation ;
- les figures 4A et 4B représentent, dans leur environnement, des dispositifs optionnels permettant d'ajuster les différents débits et/ou les températures dans le système de la figure 3 ;
- les figures 5 et 6 représentent des systèmes de refroidissement conformes à l'invention dans deux mises en oeuvre différentes ; et
- la figure 7 représente de façon schématique, les principales étapes d'un procédé de refroidissement conforme à l'invention.

### Description détaillée d'un mode de réalisation

Dans chacune des figures, les flèches en trait fin représentent des flux de mélanges psychrométriques, et les flèches en trait épais des flux liquides.

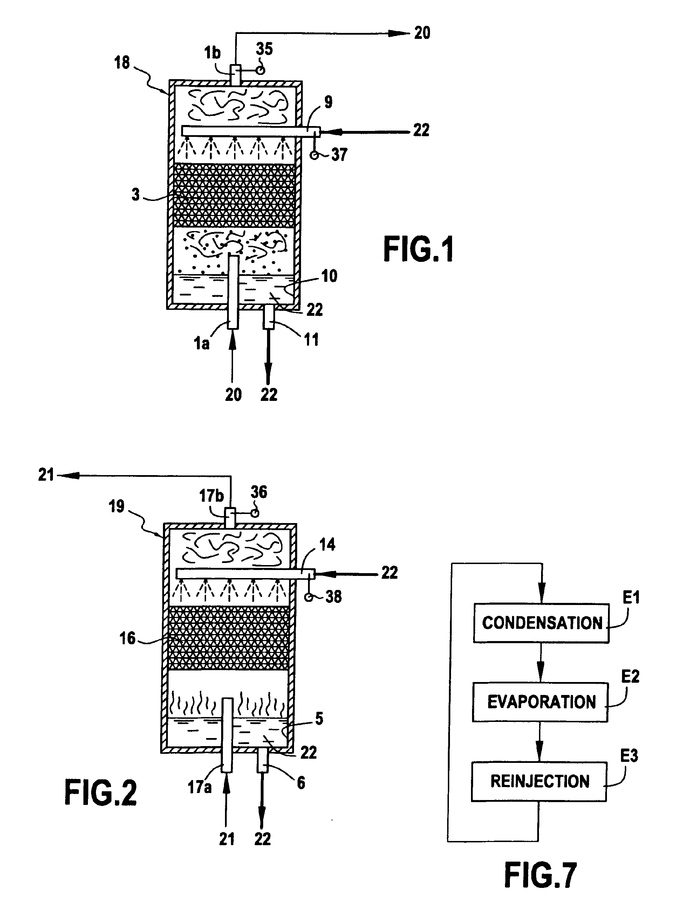

La **figure 1** représente une unité de condensation 18 conforme à l'invention, dans laquelle peut-être introduit un mélange psychrométrique 20.

Dans le mode de réalisation de la figure 1, le mélange psychrométrique est introduit dans l'unité de condensation 18 par une canalisation 1a, cette canalisation débouchant dans la partie inférieure de l'unité de condensation 18.

Dans le mode de réalisation de la figure 1, le mélange psychrométrique 20 est évacué de l'unité de condensation 18 par une canalisation 1b débouchant dans une partie supérieure de l'unité de condensation 18.

Conformément à l'invention, l'unité de condensation 18 comporte une entrée pour un liquide 22 apte à condenser un fluide du mélange psychrométrique 20. La température de ce liquide est inférieure à celle du point de rosée du mélange psychrométrique 20.

Dans le mode de réalisation de la figure 1, l'unité de condensation 18 comporte une sonde 37 apte à mesurer la température du liquide 22 en entrée de cette unité et une sonde 35 apte à mesurer la température du mélange psychrométrique 20 en sortie de cette unité.

La différence P1 entre la température mesurée par la sonde 35 et la température mesurée par la sonde 37 correspond au "pincement de condensation".

Dans le mode de réalisation décrit ici, ce liquide 22 entre dans l'unité de condensation 18 par une rampe d'alimentation 9, agencée dans la partie supérieure de l'unité de condensation 18, le liquide s'accumulant dans une soute 10 dans la partie inférieure de l'unité de condensation 18.

Autrement dit, le mélange psychrométrique 20 et le liquide 22 circulent dans l'unité de condensation 18 à contre-courant.

La canalisation la d'introduction du mélange psychrométrique 20 débouche au-dessus du niveau de liquide dans la soute 10.

Conformément à l'invention, le mélange psychrométrique 20 et le liquide entrent en contact direct dans l'unité de condensation 18.

Dans le mode de réalisation décrit ici, ce contact direct a lieu, au moins partiellement, sur un garnissage 3 situé à l'aplomb de la rampe 9 d'alimentation en liquide.

Dans le mode de réalisation décrit ici, une sortie 11 pour évacuer le liquide 22 de l'unité de condensation 18 est prévue dans le fond de la soute 10.

La mise en contact du mélange psychrométrique 20 et du liquide 22 a plusieurs effets.

D'une part, le mélange psychrométrique 20 est refroidi.

Et d'autre part, le fluide condensable contenu dans le mélange psychrométrique 20 se condense, au moins partiellement. Cela a pour effet d'augmenter le débit liquide dans l'unité de condensation 18, le débit mesuré au niveau de l'évacuation 11 étant supérieur à celui mesuré au niveau de la rampe 9.

La **figure 2** représente une unité d'évaporation 19 conforme à l'invention dans laquelle peut-être introduit un mélange psychrométrique 21, ce mélange psychrométrique comportant un fluide évaporable en concentration éloignée de ses conditions de saturation.

Dans le mode de réalisation de la figure 2, le mélange psychrométrique 21 est introduit dans l'unité d'évaporation 19 par une canalisation 17a, cette canalisation débouchant dans la partie inférieure de l'unité d'évaporation 19.

Dans le mode de réalisation de la figure 2, le mélange psychrométrique 21 est évacué de l'unité d'évaporation 19 par une canalisation 17b débouchant dans une partie supérieure de l'unité d'évaporation 19.

Conformément à l'invention, l'unité d'évaporation 19 comporte une entrée pour un liquide 22 dont la température est supérieure à celle du point de rosée du mélange psychrométrique 21.

Dans le mode de réalisation de la figure 2, l'unité d'évaporation 19 comporte une sonde 38 apte à mesurer la température en entrée de l'unité d'évaporation et une sonde 36 apte à mesurer la température du mélange psychrométrique 21 en sortie de cette unité.

La différence P2 entre la température mesurée par la sonde 38 et la température mesurée par la sonde 36 correspond au "pincement d'évaporation".

Dans le mode de réalisation décrit ici, ce liquide 22 entre dans l'unité d'évaporation 19 par un système de distribution 14, agencé dans la partie supérieure de l'unité d'évaporation 19, le liquide s'accumulant dans une soute 5 dans la partie inférieure de l'unité d'évaporation 19.

Autrement dit, le mélange psychrométrique 21 et le liquide 22 circulent dans l'unité d'évaporation 19 à contre-courant.

La canalisation 17a d'introduction du mélange psychrométrique 21 débouche au-dessus du niveau de liquide dans la soute 5.

Conformément à l'invention, le mélange psychrométrique 21 et le liquide 22 entrent en contact direct dans l'unité d'évaporation 19.

Dans le mode de réalisation décrit ici, ce contact direct a lieu, au moins partiellement, sur un garnissage 16 situé à l'aplomb du système de distribution 14 en liquide 22.

Dans le mode de réalisation décrit ici, une sortie 6 pour évacuer le liquide 22 de l'unité d'évaporation 19 est prévue dans le fond de la soute 5.

La mise en contact du mélange psychrométrique 21 et du liquide 22 a plusieurs effets.

D'une part, le liquide 22 est refroidi.

Et d'autre part, le liquide 22 s'évapore au contact du mélange psychrométrique 21, la concentration de ce mélange 21 en fluide évaporable étant éloignée de ses conditions de saturation.

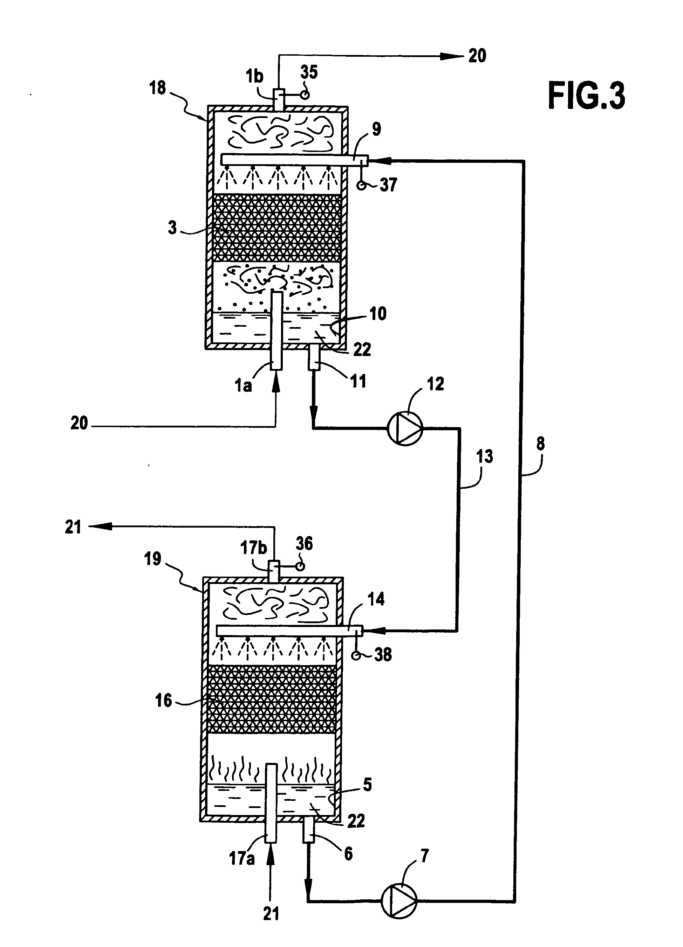

La **figure 3** représente un système de refroidissement conforme à l'invention.

Ce système comporte une unité de condensation 18 identique ou similaire à celle décrite en référence à la figure 1, et une unité d'évaporation 19 identique ou similaire à l'unité d'évaporation décrite en référence à la figure 2.

L'unité de condensation 18 et l'unité d'évaporation principale 19 sont couplées de sorte que le liquide 22 circule en boucle fermée. Plus précisément, ce système comporte :
- un premier circuit liquide 13 pour injecter le liquide 22 récupéré en sortie 11 de l'unité de condensation 18 dans le système de distribution 14 de l'unité d'évaporation 19 ; et
- un second circuit liquide 8 pour injecter le liquide 22 récupéré en sortie de l'unité d'évaporation 19 dans la rampe d'alimentation 9 de l'unité de condensation 18.

Dans le mode de réalisation de la figure 3, les premier et deuxième circuits liquides 13, 8 comportent chacun une tuyauterie de liaison 11, 6 et une pompe 12, 7.

L'homme du métier comprendra que le débit du liquide 22 est variable au sein du système selon l'invention, celui-ci augmentant dans l'unité de condensation 18 du fait de la condensation du gaz condensable du mélange psychrométrique, et diminuant dans l'unité d'évaporation 19 au contact du mélange psychrométrique 21.

Ce système permet avantageusement de transférer de la chaleur entre les deux débits gazeux tout en modifiant leurs compositions respectives en fluide condensable.

Plus précisément, le liquide 22 :
- refroidit le mélange psychrométrique 20 et l'appauvrit en gaz condensable dans l'unité de condensation 18 ; et
- réchauffe le mélange psychrométrique 21 et l'enrichit en gaz évaporable dans l'unité d'évaporation 19.

Dans le système de la figure 3, lorsque la froideur récupérée par le liquide qui s'évapore dans l'unité d'évaporation 19 est suffisante pour compenser la chaleur absorbée par le liquide dans l'unité de condensation 18, les régulations des pincements P1 de condensation et P2 d'évaporation peuvent être effectuées indépendamment l'une de l'autre grâce au réglage des débits des pompes 7 et 12, chacune de ces pompes étant respectivement adaptée à aspirer du liquide 22 contenu dans les soutes 5 et 10 avec un débit variable.

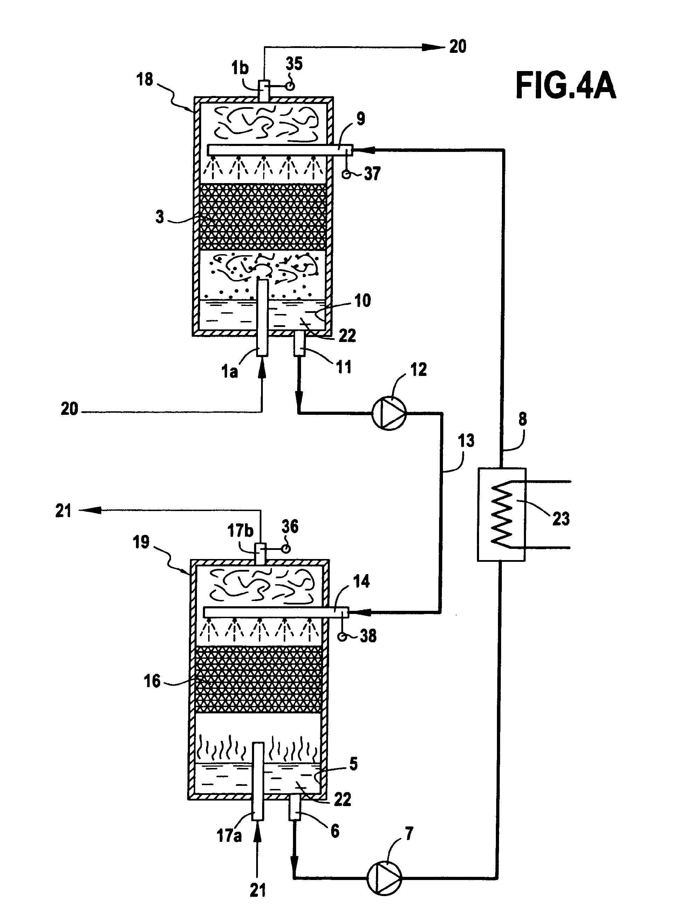

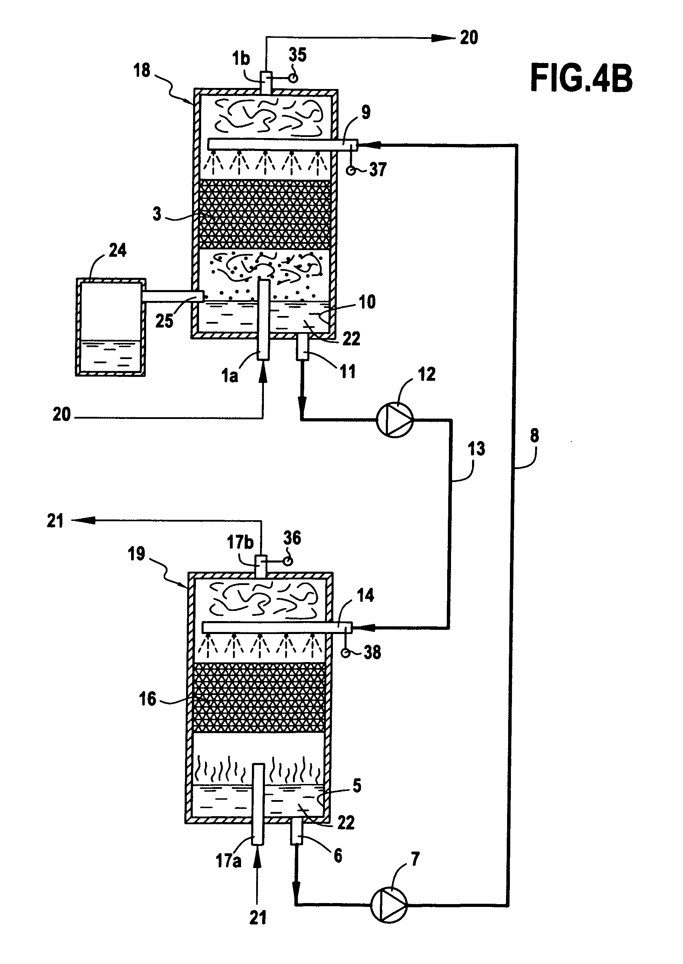

Des dispositifs complémentaires optionnels (à savoir un échangeur 23 et un trop-plein 24) permettant d'ajuster le débit sont représentés aux figures 4A et 4B.

A la **figure 4A**, on a introduit un échangeur 23 sur le second circuit liquide 8, pour refroidir fortement le débit liquide 22, en sortie de l'unité d'évaporation 19, avant réinjection dans l'unité de condensation 18.

Un tel échangeur 23 peut avantageusement être utilisé lorsque les capacités de refroidissement du débit liquide 22 circulant dans l'unité de condensation 18 sont insuffisantes pour équilibrer le bilan massique entre la masse de fluide condensée dans cette unité de condensation 18 d'une part, et la masse de fluide évaporée dans l'unité d'évaporation 19 d'autre part.

Dans le système de la figure 4A, l'échangeur 23 permet de refroidir de manière complémentaire le débit liquide injecté dans l'unité de condensation 18, cet échangeur se justifiant lorsque la puissance frigorifique récupérée dans l'unité d'évaporation 19 est inférieure à la puissance calorifique à absorber dans l'unité de condensation 18.

Préférentiellement, la régulation d'un tel système s'effectue en agissant sur les pincements P2 d'évaporation et P1 de condensation de façon séquentielle.

Par exemple, on agit d'abord sur le pincement d'évaporation P2 par le biais de la pompe 12 dont on augmente le débit. Cette augmentation de débit entraîne la diminution du pincement d'évaporation P2 et indirectement, normalement, la diminution du pincement de condensation P1.

S'il s'avère que le pincement de condensation P1 ne se réduit pas de façon suffisante, on commence par augmenter le débit de la pompe 7.

Si le pincement de condensation P1 demeure trop important, on peut, dans un troisième temps, agir sur la puissance frigorifique de l'échangeur 23.

Comme représenté à la **figure 4B**, un trop-plein 24 peut être introduit dans l'unité de condensation 18, pour évacuer, via une tuyauterie 25, une quantité excessive de fluide condensé lorsque celle-ci est beaucoup plus importante que la quantité de fluide évaporée dans l'unité d'évaporation 19.

Dans le système de la figure 4B, si le pincement de condensation P1 devient supérieur à un seuil représentatif d'un manque de débit liquide injecté dans l'unité de condensation, il est souhaitable d'augmenter les débits de liquide injectés dans l'unité d'évaporation 19 et dans l'unité de condensation 18 dans la même proportion pour réduire les pincements P1 de condensation et P2 d'évaporation pour que :
- l'excès de fluide condensé soit évacué par la tuyauterie 25 ; et que
- l'accumulation de phase liquide dans la soute 5 de l'unité d'évaporation 19 soit limitée.

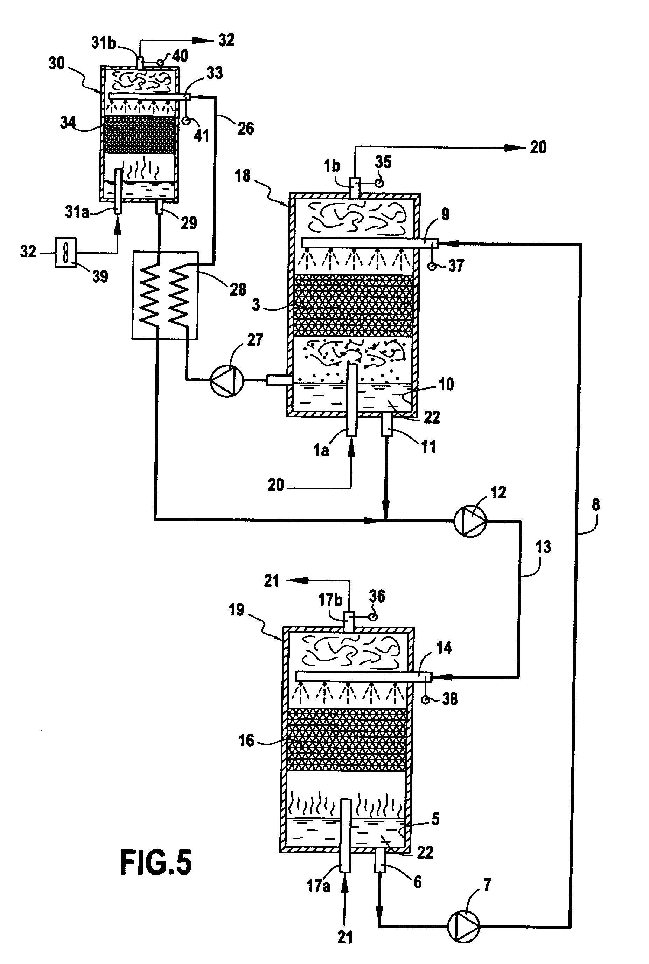

Un autre exemple de mise en oeuvre de l'invention va maintenant être décrit en référence à la **figure 5****.**

Dans cet exemple, le mélange psychrométrique 20 entrant dans l'unité de condensation 18 est un mélange de fumées humides dont :
- la température est de 0°C ; et
- la vapeur d'eau est de 4 g de H₂O/kg de fumées sèches.

Dans cet exemple ; le liquide 22 distribué par la rampe d'alimentation 9 est un mélange d'eau et de chlorure de calcium CaCl₂ à -40°C.

Comme décrit précédemment, la vapeur d'eau contenue dans la fumée humide se condense et est absorbée jusqu'à atteindre une concentration d'environ 0.1 g de H₂O/kg de fumées sèches.

Dans l'exemple de la figure 5, un débit défini du mélange d'eau et de chlorure de calcium CaCl₂, sensiblement à -40°C, est prélevé de la soute 10 de l'unité de condensation 18 pour être réchauffé, par un échangeur 28, jusqu'à atteindre une température d'environ +15°C.

En sortie de l'échangeur 28, la solution de chlorure de calcium CaCl₂ est acheminée par un circuit 26 puis répartie, par un répartiteur 33, sur le garnissage 34 d'une unité d'évaporation secondaire référencée 30.

Dans cet exemple, l'unité d'évaporation 19 est une unité d'évaporation principale au sens de l'invention.

Dans l'exemple décrit ici, l'unité d'évaporation secondaire 30 comporte une entrée 31a pour de l'air 32 à température ambiante (à savoir environ 20°C) et avec une hygrométrie relative éloignée de ses conditions de saturation, typiquement de l'ordre de 40%.

L'air 32 est mis en circulation par un ventilateur 39 dans l'unité d'évaporation secondaire 30 à contre-courant de la solution de chlorure de calcium CaCl₂.

L'eau contenue en excès dans la solution de chlorure de calcium CaCl₂ s'évapore au contact de l'air ambiant non saturé 32 sur le garnissage 34, la concentration de cette solution augmentant au niveau souhaité de salinité.

L'air 32 évacué de l'unité d'évaporation secondaire 30 (par une sortie référencée 31b) a une température d'environ 16°C et une hygrométrie de l'ordre de 90%.

La solution de chlorure de calcium CaCl₂ se réchauffe dans l'unité de condensation secondaire 30 au contact de l'air, et est réinjectée dans l'échangeur 28 à une température d'environ 18°C.

Elle en ressort à une température d'environ -38°C puis est réintégrée dans le premier circuit liquide 13, où elle est mélangée avec la solution de chlorure de calcium CaCl₂ directement puisée dans la soute 10 de l'unité de condensation 18.

Comme décrit précédemment en référence à la figure 3, le débit liquide 22 en aval de la pompe 12 est injecté dans le système de distribution 14 de l'unité d'évaporation principale 19.

Dans cet exemple, le mélange psychrométrique 21 qui circule dans l'unité d'évaporation principale 19 est un mélange de fumées froides par exemple à -50 °C, loin de ses conditions de condensation.

Comme décrit précédemment, la solution de chlorure de calcium CaCl₂, récupérée en sortie de l'unité d'évaporation principale 19 est réinjectée dans la rampe d'alimentation 9 de l'unité de condensation 18.

Dans cet exemple, on mesure la concentration de la solution de chlorure de calcium CaCl₂ en sortie de l'unité d'évaporation principale 19, par un mécanisme connu de l'homme du métier agencé sur la tuyauterie de liaison 6.

Avantageusement, on peut faire varier la concentration de la solution de chlorure de calcium CaCl₂ en sortie chacune des unités d'évaporation 30, 19 en faisant varier le débit d'air ou de fumées froides en entrée de ces unités, la température et l'hygrométrie relative de l'air et des fumées froides devant être pris en compte.

Dans le système de la figure 5, le ventilateur 39 permet d'ajuster le débit d'air qui traverse l'unité d'évaporation secondaire 30.

Dans l'exemple de réalisation décrit ici, l'unité d'évaporation secondaire 30 comporte :
- une sonde 41 apte à mesurer la température du liquide à l'entrée 33 de cette unité ; et
- une sonde 40 apte à mesurer la température de l'air humide en sortie 31b de cette unité.

Il est souhaitable que l'écart entre les températures mesurées par les sondes 40 et 41 (appelé « pincement P3 ») soit de l'ordre de 1 à 2°C.

Dans un mode particulier de réalisation de l'invention, lorsque ce pincement dépasse 1,5°C, on ajuste la puissance du ventilateur 39 ou le débit d'eau entrant dans l'unité d'évaporation secondaire de manière à garantir que le pincement P3 reste dans la plage désirée.

Dans un mode préféré de réalisation, on utilise un dispositif (non représenté) pour mesurer en continu la concentration en CaCl₂ ou LiCl, par exemple par mesure de masse volumique et de température ou par mesure de résistivité électrique.

Lorsqu'il s'avère que la concentration en eau devient trop élevée, on ajuste la puissance du ventilateur 39 pour accroître l'évaporation du mélange eau/CaCl₂ ou eau/LiCl afin d'éviter un risque de formation d'une phase solide.

Le schéma de régulation global suivant peut être mis en oeuvre :
- si le pincement de condensation P1 s'accroît, le débit liquide entrant dans l'unité de condensation 18 est accru par la pompe 7 jusqu'à obtenir un pincement P1 cible (de l'ordre de 1°C) ;
- si le pincement d'évaporation P2 s'accroît, le débit liquide est accru par la pompe 12 jusqu'à obtenir le pincement P2 cible (de l'ordre de 1°C) ;
- si le pincement P3 dans l'unité d'évaporation secondaire 30 s'accroît, le débit de liquide entrant dans cette unité 30 est accru par la pompe 27 ; et
- si la concentration en eau s'accroît, on augmente la puissance du ventilateur 39 pour diminuer le pincement P3.

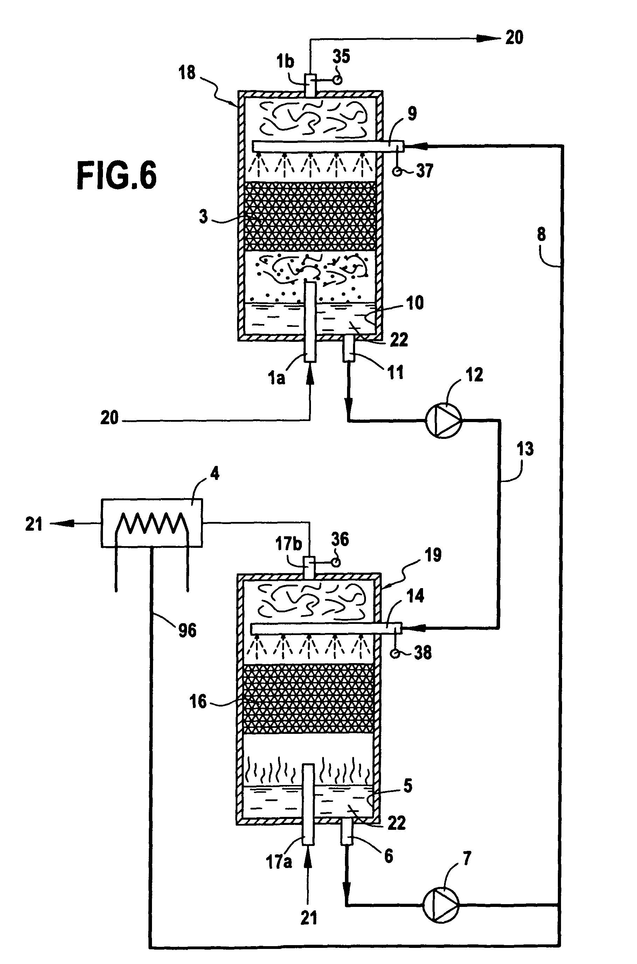

Un système conforme à l'invention représenté à la **figure 6** peut aussi être utilisé pour déshumidifier un mélange psychrométrique de fumées, la déshumidification s'effectuant à une température comprise entre -40°C et -90°C, la concentration en vapeur d'eau diminuant de 10⁻¹ à 10⁻⁶ g de H₂O/kg de fumées sèches.

Dans cette application, le liquide 22 vaporisé sur le garnissage 3 de l'unité de condensation 18 par la rampe d'alimentation 9 peut être une solution d'éthanol ou de méthanol ou de d-limonène, la vapeur d'eau étant absorbée par l'éthanol pur, le méthanol ou le d-limonène.

La concentration en éthanol du mélange d'eau et d'éthanol qui s'accumule dans la soute 10 de l'unité d'évaporation 18 est comprise entre 96% et 99,9% ; elle dépasse la concentration azéotropique de 95% en éthanol.

Comme décrit précédemment, ce mélange est réparti sur le garnissage 16 de l'unité d'évaporation principale 19.

Dans cet exemple, le mélange psychrométrique 21 constitué par les fumées froides entre dans l'unité d'évaporation principale 19 à environ -110°C et évapore l'eau et une partie de l'éthanol.

Comme précédemment décrit, ce mélange psychrométrique 21 est évacué de l'unité d'évaporation 19 par une canalisation 17b.

Dans le mode de réalisation décrit ici, un échangeur 4 est placé sur cette canalisation 17b pour récupérer et condenser l'éthanol compris dans ces fumées.

L'éthanol condensé est réinjecté dans le second circuit liquide 8, entre la sortie de l'unité d'évaporation 19 et la rampe d'alimentation 9 de l'unité de condensation 18, par une canalisation 96.

La **figure 7** représente de façon schématique, les principales étapes d'un procédé de refroidissement conforme à l'invention.

Ce procédé peut être mis en oeuvre dans le système conforme à l'invention pour refroidir le mélange psychrométrique 20. II comporte trois étapes principales effectuées en boucle :
- une étape E1 de condensation du fluide contenu dans le mélange psychrométrique 20 par contact direct avec un liquide 22 de température inférieure à celle du point de rosée du premier mélange psychrométrique 20 ;
- une étape E2 d'évaporation du liquide 22 condensé lors de l'étape E1 de condensation dans un deuxième mélange psychrométrique 21 comportant le fluide précité, le liquide 22 étant à une température supérieure à celle du point de rosée du deuxième mélange psychrométrique 21 ; et
- une étape E3 de réinjection du liquide évaporé lors l'étape d'évaporation E2 pour utilisation dans l'étape de condensation E1.

## Revendications

1. Système de refroidissement d'un premier mélange psychrométrique (20), ce système comportant :
- une unité de condensation (18) comportant un circuit (1a, 1b) de circulation dudit premier mélange psychrométrique (20), cette unité de condensation étant apte à condenser un fluide contenu dans ledit mélange par contact direct avec un liquide (22) comportant ledit fluide, ledit liquide (22) étant, dans ladite unité de condensation (18) à une température inférieure à celle du point de rosée dudit premier mélange (20) ;
- une unité d'évaporation principale (19) comportant un circuit (17a, 17b) de circulation d'un deuxième mélange psychrométrique (21) comportant ledit fluide, cette unité d'évaporation principale (19) étant apte à évaporer ledit liquide (22) dans ledit deuxième mélange psychrométrique (21), ledit liquide (22) étant, dans ladite unité d'évaporation (19) à une température supérieure à celle du point de rosée dudit deuxième mélange (21), lesdites unités (18, 19) étant couplées par un circuit (8, 13) de circulation dudit liquide ledit circuit de circulation comportant :
- l'injection dudit liquide dans ladite unité de condensation, en provenance de ladite unité d'évaporation ; et
- l'injection du liquide chargé en fluide condensé en provenance de l'unité de condensation dans ladite unité d'évaporation ;
- des moyens de régulation d'au moins un débit dudit liquide (22) dans ledit système, **caractérisé en ce que** lesdits moyens de régulation comportent :
- des moyens de mesure d'un écart de température entre la température du liquide (22) entrant dans au moins une desdites unités (18, 19) et la température du mélange psychrométrique (20, 21) sortant de ladite unité (18, 19) ; et
- des moyens pour régler le débit de liquide entrant dans ladite unité (18, 19) en fonction de cet écart de température.

2. Système selon la revendication 1 **caractérisé en ce que** les moyens pour régler le débit de liquide (22) entrant dans une unité (18, 19) comporte une pompe (7, 12) apte à injecter du liquide (22) dans ladite unité à partir d'une réserve (5, 10).

3. Système selon la revendication 2 **caractérisé en ce que** la réserve utilisée pour régler le débit de liquide injecté dans une (18, 19) desdites unités est constituée par une soute (5, 10) agencée dans la partie inférieure de l'autre (19, 18) unité (19, 18).

4. Système selon l'une quelconque des revendications 1 à 3, **caractérisé en ce qu'**il comporte des moyens de réglage du débit d'au moins un desdits mélanges psychrométriques (20, 21).

5. Système selon l'une quelconque des revendications 1 à 4, **caractérisé en ce qu'**il comporte des moyens (23) pour refroidir ledit liquide (22) en sortie (6) de ladite unité d'évaporation principale (19).

6. Système selon la revendication 5 **caractérisé en ce que** lesdits moyens de régulation sont aptes à :
- accroître le débit de liquide (22) entrant dans ladite unité d'évaporation principale (19) ;
- accroître le débit de liquide (22) entrant dans ladite unité de condensation (18) ;
- mesurer l'écart de température entre la température du liquide (22) entrant dans ladite unité de condensation (18) et la température du mélange psychrométrique (20) sortant de ladite unité de condensation (18) ; et, lorsque ledit écart de température est supérieur à un seuil :
- agir sur lesdits moyens (23) de refroidissement dudit liquide (22) pour en accroître la puissance frigorifique.

7. Système selon l'une quelconque des revendications 1 à 6, **caractérisé en ce qu'**il comporte un trop-plein (24) pour évacuer une partie du liquide (22) condensé dans ladite unité de condensation (18).

8. Système selon la revendication 7, **caractérisé en ce que** lesdits moyens de régulation sont aptes à :
- mesurer l'écart de température entre la température du liquide (22) entrant dans ladite unité de condensation (18) et la température du mélange psychrométrique (20) sortant de ladite unité de condensation (18) ; et lorsque ledit écart de température est supérieur à un seuil :
- accroître les débits de liquide (22) entrant dans lesdites unités (18, 19) dans des mêmes proportions similaires.

9. Système selon l'une quelconque des revendications 1 à 8, dans lequel ledit liquide (22) comporte un sel, **caractérisé en ce qu'**il comporte une unité d'évaporation secondaire (30) dudit liquide (22), placée en série entre ladite unité de condensation (18) et ladite unité d'évaporation principale (19) dans ledit circuit de circulation (8, 13) dudit liquide (22), ladite unité d'évaporation secondaire fonctionnant à une température largement supérieure à celle de ladite unité d'évaporation principale (19).

10. Système selon la revendication 9, **caractérisé en ce que** ladite unité d'évaporation secondaire (30) comporte une entrée (31a) et une sortie (31b) d'air (32), l'air étant apte à circuler à contre courant dudit liquide (22) dans ladite unité d'évaporation secondaire (30), et un ventilateur (39) à débit variable en amont de ladite entrée d'air (31a) lesdits moyens de régulation étant aptes à ajuster le débit d'air et le débit de liquide (22) entrant dans ladite unité d'évaporation secondaire en fonction d'un écart de température entre la température du liquide (22), entrant dans ladite unité (30) et la température de l'air (32) sortant de ladite unité (30).

11. Système selon la revendication 9 ou 10 **caractérisé en ce qu'**il comporte un échangeur (28) de chaleur apte à récupérer la froideur dudit liquide (22) s'écoulant de ladite unité de condensation (18) vers ladite unité d'évaporation secondaire (30).

12. Système selon l'une quelconque des revendications 9 à 11, **caractérisé en ce qu'**il comporte des moyens d'ajustement de la concentration en sel dans ledit liquide en sortie (29, 6) de chacune desdites unités d'évaporation (19, 30).

13. Procédé de refroidissement d'un premier mélange psychrométrique (20), ce procédé comportant en boucle fermée :
- une étape (E1) de condensation d'un fluide contenu dans le mélange par contact direct avec un liquide (22) comportant ledit fluide, ledit liquide (22) étant à une température inférieure à celle du point de rosée dudit premier mélange (20), et
- une étape (E2) d'évaporation du liquide (22) condensé lors de ladite étape de condensation (E1) dans un deuxième mélange psychrométrique (21) comportant ledit fluide, ledit liquide (22) étant à une température supérieure à celle du point de rosée dudit deuxième mélange (21), et
- une étape (E3) de réinjection du liquide évaporé lors de ladite étape d'évaporation (E2) pour utilisation dans ladite étape de condensation (E1).

14. Procédé de refroidissement selon la revendication 13, effectué en utilisant un système selon l'une des revendications 1 à 12.

## Patentansprüche

1. System zur Kühlung eines ersten psychrometrischen Gemischs (20), wobei dieses System umfasst:
- eine Kondensationseinheit (18), die einen Kreislauf (1a, 1 b) zur Zirkulation des ersten psychrometrischen Gemischs (20) umfasst, wobei diese Kondensationseinheit geeignet ist, ein in dem Gemisch enthaltenes Fluid durch direkten Kontakt mit einer das Fluid umfassenden Flüssigkeit (22) zu kondensieren, wobei sich die Flüssigkeit (22) in der Kondensationseinheit (18) auf einer Temperatur befindet, die niedriger als diejenige des Taupunktes des ersten Gemischs (20) ist;
- eine Verdunstungshaupteinheit (19), die einen Kreislauf (17a, 17b) zur Zirkulation eines das Fluid umfassenden zweiten psychrometrischen Gemischs (21) umfasst, wobei diese Verdunstungshaupteinheit (19) geeignet ist, die Flüssigkeit (22) in dem zweiten psychrometrischen Gemisch (21) zu verdunsten, wobei sich die Flüssigkeit (22) in der Verdunstungseinheit (19) auf einer Temperatur befindet, die höher als diejenige des Taupunktes des zweiten Gemischs (21) ist, wobei die Einheiten (18, 19) durch einen Kreislauf (8, 13) zur Zirkulation der Flüssigkeit gekoppelt sind, wobei der Zirkulationskreislauf umfasst:
- das Einleiten der Flüssigkeit in die Kondensationseinheit aus der Verdunstungseinheit; und
- das Einleiten der mit kondensiertem Fluid beladenen Flüssigkeit aus der Kondensationseinheit in die Verdunstungseinheit;
- Mittel zur Regelung wenigstens eines Durchsatzes der Flüssigkeit (22) in dem System, **dadurch gekennzeichnet, dass** die Regelungsmittel umfassen:
- Mittel zum Messen einer Temperaturdifferenz zwischen der Temperatur der Flüssigkeit (22), die in wenigstens eine der Einheiten (18, 19) eintritt, und der Temperatur des aus der Einheit (18, 19) austretenden psychrometrischen Gemischs (20, 21); und
- Mittel zum Einstellen des Durchsatzes von in die Einheit (18, 19) eintretender Flüssigkeit in Abhängigkeit von dieser Temperaturdifferenz.

2. System nach Anspruch 1, **dadurch gekennzeichnet, dass** die Mittel zum Einstellen des Durchsatzes von in eine Einheit (18, 19) eintretender Flüssigkeit (22) eine Pumpe (7, 12) umfassen, die geeignet ist, Flüssigkeit (22) von einer Reserve (5, 10) aus in die Einheit einzuleiten.

3. System nach Anspruch 2, **dadurch gekennzeichnet, dass** die Reserve, die verwendet wird, um den Durchsatz von in eine (18, 19) der Einheiten eingeleiteter Flüssigkeit einzustellen, durch einen Raum (5, 10) gebildet ist, der im unteren Teil der anderen (19, 18) Einheit (19, 18) angeordnet ist.

4. System nach einem der Ansprüche 1 bis 3, **dadurch gekennzeichnet, dass** es Mittel zum Einstellen des Durchsatzes von wenigstens einem der psychrometrischen Gemische (20, 21) umfasst.

5. System nach einem der Ansprüche 1 bis 4, **dadurch gekennzeichnet, dass** es Mittel (23) umfasst, um die Flüssigkeit (22) am Ausgang (6) der Verdunstungshaupteinheit (19) zu kühlen.

6. System nach Anspruch 5, **dadurch gekennzeichnet, dass** die Regelungsmittel geeignet sind:
- den Durchsatz von in die Verdunstungshaupteinheit (19) eintretender Flüssigkeit (22) zu erhöhen;
- den Durchsatz von in die Kondensationseinheit (18) eintretender Flüssigkeit (22) zu erhöhen;
- die Temperaturdifferenz zwischen der Temperatur der Flüssigkeit (22), die in die Kondensationseinheit (18) eintritt, und der Temperatur des aus der Kondensationseinheit (18) austretenden psychrometrischen Gemischs (20) zu messen; und, wenn die Temperaturdifferenz oberhalb einer Schwelle liegt:
- auf die Mittel (23) zum Kühlen der Flüssigkeit (22) einzuwirken, um deren Kühlleistung zu erhöhen.

7. System nach einem der Ansprüche 1 bis 6, **dadurch gekennzeichnet, dass** es einen Überlauf (24) umfasst, um einen Teil der in der Kondensationseinheit (18) kondensierten Flüssigkeit (22) abzuführen.

8. System nach Anspruch 7, **dadurch gekennzeichnet, dass** die Regelungsmittel geeignet sind:
- die Temperaturdifferenz zwischen der Temperatur der Flüssigkeit (22), die in die Kondensationseinheit (18) eintritt, und der Temperatur des aus der Kondensationseinheit (18) austretenden psychrometrischen Gemischs (20) zu messen; und, wenn die Temperaturdifferenz oberhalb einer Schwelle liegt:
- die Durchsätze von in die Einheiten (18, 19) eintretender Flüssigkeit (22) in gleichen ähnlichen Verhältnissen zu erhöhen.

9. System nach einem der Ansprüche 1 bis 8, wobei die Flüssigkeit (22) ein Salz umfasst, **dadurch gekennzeichnet, dass** es eine Nebeneinheit zur Verdunstung (30) der Flüssigkeit (22) umfasst, die zwischen der Kondensationseinheit (18) und der Verdunstungshaupteinheit (19) in dem Zirkulationskreislauf (8, 13) der Flüssigkeit (22) in Reihe geschaltet ist, wobei die Verdunstungsnebeneinheit mit einer Temperatur arbeitet, die weit über derjenigen der Verdunstungshaupteinheit (19) liegt.

10. System nach Anspruch 9, **dadurch gekennzeichnet, dass** die Verdunstungsnebeneinheit (30) einen Einlass (31 a) und einen Auslass (31 b) für Luft (32), wobei die Luft geeignet ist, im Gegenstrom zu der Flüssigkeit (22) in der Verdunstungsnebeneinheit (30) zu zirkulieren, sowie ein Gebläse (30) mit veränderlicher Leistung vor dem Lufteinlass (31 a) umfasst, wobei die Regelungsmittel geeignet sind, die Luftmenge und die Menge an Flüssigkeit (22), die in die Verdunstungsnebeneinheit eintreten, in Abhängigkeit von einer Temperaturdifferenz zwischen der Temperatur der in die Einheit (30) eintretenden Flüssigkeit (22) und der Temperatur der aus der Einheit (30) austretenden Luft (32) einzustellen.

11. System nach Anspruch 9 oder 10, **dadurch gekennzeichnet, dass** es einen Wärmetauscher (28) umfasst, der geeignet ist, die Kälte der Flüssigkeit (22), die von der Kondensationseinheit (18) in Richtung der Verdunstungsnebeneinheit (30) strömt, aufzufangen.

12. System nach einem der Ansprüche 9 bis 11, **dadurch gekennzeichnet, dass** es Mittel zum Einstellen der Salzkonzentration in der Flüssigkeit am Ausgang (29, 6) von jeder der Verdunstungseinheiten (19, 30) umfasst.

13. Verfahren zur Kühlung eines ersten psychrometrischen Gemischs (20), wobei dieses Verfahren in geschlossener Schleife umfasst:
- einen Schritt (E1) zur Kondensation eines in dem Gemisch enthaltenes Fluids durch direkten Kontakt mit einer das Fluid umfassenden Flüssigkeit (22), wobei sich die Flüssigkeit (22) auf einer Temperatur befindet, die niedriger als diejenige des Taupunktes des ersten Gemischs (20) ist, und
- einen Schritt (E2) zur Verdunstung der während des Kondensationsschrittes (E1) kondensierten Flüssigkeit (22) in einem das Fluid umfassenden zweiten psychrometrischen Gemisch (21), wobei sich die Flüssigkeit (22) auf einer Temperatur befindet, die höher als diejenige des Taupunktes des zweiten Gemischs (21) ist, und
- einen Schritt (E3) zum Wiedereinleiten der während des Verdunstungsschrittes (E2) verdunsteten Flüssigkeit für die Verwendung bei dem Kondensationsschritt (E1).

14. Kühlungsverfahren nach Anspruch 13, das unter Verwendung eines Systems nach einem der Ansprüche 1 bis 12 durchgeführt wird.

## Claims

1. A cooling system of a first psychrometric mixture (20), this system comprising:
- a condensation unit (18) comprising a circulation circuit (1a, 1b) of said first psychrometric mixture (20), this condensation unit being capable of condensing fluid contained in said mixture by direct contact with liquid (22) comprising said fluid, said liquid (22) being in said condensation unit (18) at a temperature below that of the dew point of said first mixture (20);
- a main evaporation unit (19) comprising a circulation circuit (17a, 17b) of a second psychrometric mixture (21) comprising said fluid, this main evaporation unit (19) being capable of evaporating said liquid (22) in said second psychrometric mixture (21), said liquid (22) being in said evaporation unit (19) at a temperature greater than that of the dew point of said second mixture (21), said units (18, 19) being coupled via a circulation circuit (8, 13) of said liquid said circuit comprising:
- the injection of said liquid into the condensation unit from the evaporation unit ; and
- the injection of the liquid charged with the condensed fluid into the evaporation unit from the condensation unit ;
- regulating means of at least one flow of said liquid (22) in said system, wherein said regulating means comprise:
- means for measuring a temperature range between the temperature of the liquid (22) entering at least one of said units (18, 19) and the temperature of the psychrometric mixture (20, 21) leaving said unit (18, 19); and
- means for regulating the liquid flow entering said unit (18, 19) as a function of this temperature range.

2. The system as claimed in Claim 1, **characterised in that** the means for regulating the liquid flow (22) entering a unit (18, 19) comprises a pump (7, 12) capable of injecting liquid (22) into said unit from a storage tank (5, 10).

3. The system as claimed in Claim 2, **characterised in that** the storage tank used for regulating the liquid flow injected into one (18, 19) of said units is constituted by a compartment (5, 10) arranged in the lower part of the other (19, 18) unit (19, 18).

4. The system as claimed in any one of Claims 1 to 3, **characterised in that** it comprises flow regulating means of at least one of said psychrometric mixtures (20, 21).

5. The system as claimed in any one of Claims 1 to 4, **characterised in that** it comprises means (23) for cooling said liquid (22) discharging (6) from said main evaporation unit (19).

6. The system as claimed in Claim 5, **characterised in that** said regulating means are capable of:
- increasing the liquid flow (22) entering said main evaporation unit (19);
- increasing the liquid flow (22) entering said condensation unit (18);
- measuring the temperature range between the temperature of the liquid (22) entering said condensation unit (18) and the temperature of the psychrometric mixture (20) leaving said condensation unit (18); and when said temperature range is over a threshold:
- acting on said cooling means (23) for said liquid (22) to increase the cooling power.

7. The system as claimed in any one of Claims 1 to 6, **characterised in that** it comprises an overflow (24) for discharging part of the liquid (22) condensed in said condensation unit (18).

8. The system as claimed in Claim 7, **characterised in that** said regulating means are capable of:
- measuring the temperature range between the temperature of the liquid (22) entering said condensation unit (18) and the temperature of the psychrometric mixture (20) leaving said condensation unit (18); and when said temperature range is over a threshold:
- increasing liquid flows (22) entering said units (18, 19) in same similar proportions.

9. The system as claimed in any one of Claims 1 to 8, in which said liquid (22) comprises a salt, **characterised in that** it comprises a secondary evaporation unit (30) of said liquid (22), placed in series between said condensation unit (18) and said main evaporation unit (19) in said circulation circuit (8, 13) of said liquid (22), said secondary evaporation unit operating at a temperature much greater than that of said main evaporation unit (19).

10. The system as claimed in Claim 9, **characterised in that** said secondary evaporation unit (30) comprises an intake (31a) and a discharge (31b) for air (32), the air being capable of circulating counter-current to said liquid (22) in said secondary evaporation unit (30), and a fan (39) of variable rate upstream of said air intake (31a), said regulating means being capable of adjusting the air flow and the liquid flow (22) entering said secondary evaporation unit as a function of a temperature range between the temperature of liquid (22) entering said unit (30) and the temperature of the air (32) leaving said unit (30).

11. The system as claimed in Claim 9 or 10 **characterised in that** it comprises a heat exchanger (28) capable of recovering the coolness of said liquid (22) flowing from said condensation unit (18) to said secondary evaporation unit (30).

12. The system as claimed in any one of Claims 9 to 11, **characterised in that** it comprises adjustment means of the salt concentration in said liquid leaving (29, 6) each of said evaporation units (19, 30).

13. A cooling process of a first psychrometric mixture (20), this process comprising in a closed loop:
- a condensation step (E1) of fluid contained in the mixture by direct contact with liquid (22) comprising said fluid, said liquid (22) being at a temperature below that of the dew point of said first mixture (20), and
- an evaporation step (E2) of the liquid (22) condensed during said condensation step (E1) in a second psychrometric mixture (21) comprising said fluid, said liquid (22) being at a temperature greater than that of the dew point of said second mixture (21), and
- a reinjection step (E3) of the liquid evaporated during said evaporation step (E2) for use in said condensation step (E1).

14. A cooling process according to Claim 13 performed using a system according to any one of Claims 1 to 12.
